# EUROPEAN PATENT APPLICATION

(11) **EP 4 674 602 A1**
(43) Date of publication of application: **07.01.2026**
(21) Application number: 25184725.7
(22) Date of filing: 24.06.2025
(51) Int. Cl.: B29C 65/36, B29C 65/78, B65B 9/20, B65B 51/22, B65B 51/26

(54) **A HEATING ARRANGEMENT FOR A LONGITUDINAL EDGE SECTION OF A WEB OF PACKAGING MATERIAL**

(30) Priority: 02.07.2024 EP 24185866
(71) Applicant: Tetra Laval Holdings & Finance S.A., 1009 Pully (CH)
(72) Inventor: Svärd, Dag, 22186 Lund (SE)
(74) Representative: Tetra Pak Patent Attorneys

(57) **Abstract**

A heating arrangement (100) for a longitudinal edge section (126) of a web (104) of packaging material is disclosed. The heating arrangement (100) comprises an electric inductor (106) comprising a first and a second coil element (108, 110), wherein an opening (112), configured to allow the longitudinal edge section (126) of the web (104) to pass, is formed between the first and second coil element (108, 110), and a guiding arrangement (114) arranged in the opening (112) between the first and second coil element (108, 110) such that the web (104) is prevented from being in direct contact with the first and/or second coil element (108, 110).

## Description

### Technical Field

The invention relates to packaging technology. More particularly, it is related to a heating arrangement for a longitudinal edge section of a web of packaging material, a method for pre-treating the longitudinal edge section before applying a strip of protective material, a method for applying the strip of protective material, a method for producing packages, a packaging apparatus and a kit of parts for upgrading an existing heating arrangement.

### Background Art

Today, roll-fed packaging machines for producing carton packages are well known. An example is the packaging machines marketed by Tetra Pak^{™} producing Tetra Brik^{™} packages. The general principle of this type of machine is to provide a web of packaging material to the machine, form this web into a tube by using a longitudinal sealing station, fill the tube from above with a food product, and form packages in a lower end of the tube by using a transversal sealing station. The web of packaging material may be arranged in different ways, but generally the packaging material is a laminate comprising at least one cellulose-based mid-layer, an inner protective layer for protecting the mid-layer from the food product, and an outer layer for protecting a décor and the mid-layer from moisture, scratches etc. In the longitudinal sealing station, longitudinal edge sections of the web are guided towards one another and attached to each other such that the tube is formed. To avoid that the mid-layer, that may be made of carton, is exposed to the food product filled into the tube, a strip of protective material is applied such that an edge of the laminate placed inside the tube is covered.

Using a strip applicator for avoiding direct contact between the edge inside the tube and the food product is a well-established practice. To provide for that the strip adheres to the web, an electric inductor may be used. The electric inductor is arranged to induce eddy currents in the packaging material, e.g. via an Aluminum foil layer of the packaging material. An effect of the eddy currents is that the inner protective layer melts, which in turn provides for that the strip can be adhered to the web.

The concept of using the electric inductor for preparing the packaging material before applying the strip has been improved over the years, and today reliable strip application can be achieved. Even though the strip applicator of today provides reliable adherence between the strip and the web, there is room for improvement.

### Summary

It is an object of the invention to at least partly overcome one or more of the above-identified limitations of the prior art. In particular, it is an object to provide for that a web of packaging material can be heated more consistently to provide for that more reliable adherence between the web and a strip of protective material can be achieved. In addition, it is an object to provide for that the strip applicator, or more particularly the electric inductor of the strip applicator, can be used for a wider range of different types of packaging materials. Further, it is also an object to reduce a number of so-called cold spots arising from when the web is in direct contact with the electric inductor.

According to a first aspect it is provided a heating arrangement for a longitudinal edge section of a web of packaging material. The heating arrangement may comprise an electric inductor comprising a first and a second coil element, wherein an opening, configured to allow the longitudinal edge section of the web to pass, is formed between the first and second coil element, and a guiding arrangement arranged in the opening between the first and second coil element such that the web is prevented from being in direct contact with the first and/or second coil element.

By having the guiding arrangement placed in the opening, a risk of having the web of packaging material touching the electric inductor can be reduced. As an effect of this, a more consistent heating of the web can be achieved. For instance, so called cold spots can be avoided.

The risk of having the web in direct contact with the electric inductor may be higher during a start-up sequence than during a subsequent steady running sequence. In this way, by being able to address this risk, a number of wasted packages formed during the start-up sequence of a packaging apparatus comprising the heating arrangement can be reduced.

A further advantage is that a larger variety of the packaging materials can be used with one and the same heating arrangement. Different packaging materials may namely behave differently, e.g. because of a thickness of the packaging material, with a result that the risk that the web is in direct contact may be different for different packaging materials. By using the guiding arrangement, less room for movement of web is allowed resulting in that the differences between the different packaging materials is less of a problem.

Still an advantage is cost efficiency. By using the guiding arrangement, this may be adapted to meet characteristics of a specific packaging material or specific group of packaging materials, while a setup of the electric inductor does not necessarily have to be adapted to these characteristics. In other words, the concept described herein provides for a modular approach providing for improved cost efficiency.

The guiding arrangement may comprise a first and a second edge element covering a longitudinal edge of the first and second coil element, respectively.

By having these elements, a risk of having the web exposed to edges of the first and/or second coil elements can be reduced.

The guiding arrangement may comprise a first and/or a second mid-portion element abutting a mid-section of the first and second coil element, respectively. The guiding arrangement may also comprise the first mid-portion element without the second mid-portion element, as well as the second mid-portion element without the first mid-portion element.

An edge distance between the first and second edge element and/or an mid-section distance between the first and second mid-portion element may be between 0.6 and 2.4 mm.

A ratio between a thickness of the web and the edge distance and/or the mid-portion distance may be between 0.1 and 0.3.

A first distance may be provided between the first edge element and the first mid-portion element, and a second distance may be provided between the second edge element and the second mid-portion element, such that, during operation, a first void space is formed between the first coil element and the web and a second void space is formed between the second coil element and the web.

By having the edge elements and the mid-portion elements placed at distances from each other, it is made possible provide for that there is no direct contact between the web and the electric inductor and yet only affect the induction heating to a minor degree.

The electric inductor may be arranged to intermittently induce eddy currents in the web.

The eddy currents are pulsed at a period of 150 ms or less.

The heating arrangement may comprise a web guide arranged to interact with a mid-section of the web, wherein the mid-section of the web may be placed transversally with respect to the longitudinal edge section of the web in view of a feeding direction of the web, wherein the web guide may be placed at a distance from the guiding arrangement.

The guiding arrangement may comprise a distance member arranged between the first and second mid-portion element, and one or more mounting screws arranged to fixate the second edge element, the second mid-portion element, the distance member, the first mid-portion element and the first edge element to a frame of the heating arrangement.

According to a second aspect it is provided a method for pre-treating a longitudinal edge section of a web of packaging material before applying a strip of protective material onto the longitudinal edge section. The method may comprise feeding the longitudinal edge section of the web through an opening in a heating arrangement comprising an electric inductor in turn comprising a first and a second coil element, wherein the opening is formed between the first and second coil element, guiding the web of packaging material using a guiding arrangement provided in the opening, and heating the longitudinal edge section by inducing eddy currents in the packaging material using the electric inductor.

The same advantages and features as presented above with respect to the first aspect also apply to this second aspect.

According to a third aspect it is provided a method for applying a strip of protective material onto a longitudinal edge section of a web of packaging material. The method may comprise pre-treating the longitudinal edge section according to the second aspect, placing the strip of protective material onto the longitudinal edge section of the web, and applying pressure such that the strip adheres to the longitudinal edge section.

According to a fourth aspect it is provide a method for producing packages from a web of packaging material. The method may comprise providing the web of packaging material, applying a first longitudinal section of a strip of protective material onto a longitudinal edge section of the web according to the third aspect, forming a tube from the web of packaging material, applying a second longitudinal section of the strip of protective material onto an inside of the tube such that an edge of the web is shielded from the inside of the tube, and filling food product into the tube from above, wherein the strip is preventing the food product from being in direct contact with the edge.

According to a fifth aspect it is provided a packaging apparatus comprising a heating arrangement according to the first aspect.

According to a sixth aspect it is provided a kit of parts for upgrading an existing heating arrangement for heating a longitudinal edge section of a web of packaging material into a heating arrangement according to the first aspect. The existing heating arrangement may comprise an electric inductor comprising a first and a second coil element, wherein an opening, configured to allow a longitudinal edge section of a web of packaging material to pass, is formed between the first and second coil element. The kit of parts may comprise a guiding arrangement arranged to be placed in the opening between the first and second coil element such that the web is prevented from being in direct contact with the first and/or second coil element, wherein the guiding arrangement is configured to be assembled to the existing heating arrangement such that the existing heating arrangement is upgraded into the heating arrangement according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1A is a cross-sectional view of a heating arrangement for a web of packaging material.
Fig. 1B illustrates the heating arrangement from above.
Fig. 2 generally illustrates a packaging apparatus using the heating arrangement illustrated in fig. 1A and 1B.
Fig. 3 is a cross-sectional view of a longitudinal sealing provided in a tube of packaging material formed from the web.
Fig. 4 is a perspective view of a more detailed example of the heating arrangement.
Fig. 5 is a more detailed perspective view of a front section of the heating arrangement illustrated in fig. 4.
Fig. 6 is another perspective view of the front section of the heating arrangement illustrated in fig. 4 and 5.
Fig. 7 is yet another perspective view of the front section of the heating arrangement illustrated in fig. 4 to 6.
Fig. 8 is still another perspective view of the front section of the heating arrangement illustrated in fig. 4 to 7.
Fig. 9 is a flowchart illustrating a method for pre-treating a longitudinal edge section of the web.
Fig. 10 is a flowchart illustrating a method for applying a strip of protective material onto the longitudinal edge section.
Fig. 11 is a flowchart illustrating a method for producing packages from the web of packaging material.

### Detailed Description

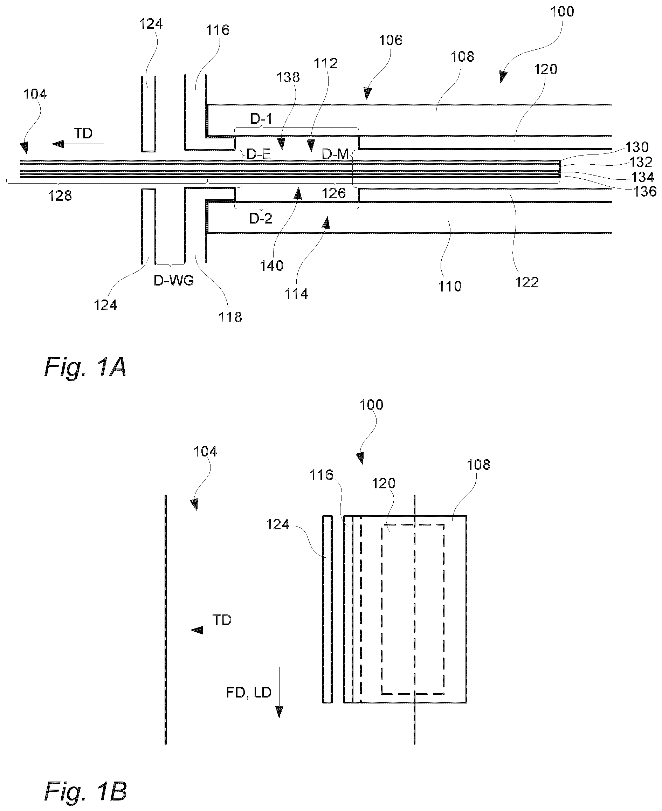

Fig. 1A generally illustrates by way of example a cross-sectional view along a transversal direction TD of a heating arrangement 100 that can be used for heating a longitudinal edge section 126 of a web 104 of packaging material. The heating arrangement 100 may form part of an arrangement for applying a strip of protective material onto the longitudinal edge section. This arrangement is sometimes referred to as a strip applicator. The heating arrangement 100 may comprise, as illustrated, an electric inductor 106 comprising a first and a second coil element 108, 110. Between the two elements, an opening 112 may be provided. In this opening 112, the web 104 is allowed to pass. The electric inductor (106) is configured to heat the packaging material by inducing eddy currents such that an outer protective layer (130) of the packaging material at least partly melts.

To provide for that the web 104 is held at a distance from the first and second coil element 108, 110, a guiding arrangement 114 may be provided such that the web 104 is prevented from being in direct contact with the first and/or second coil element 108, 110. As illustrated, this arrangement may comprise a first edge element 116 placed partly inside the opening 112 at a peripheral upper end of the electric inductor 106, and/or a second edge element 118 placed partly inside the opening 112 at a peripheral lower end. Put differently, the first and second edge element 116, 118 may be arranged such that a longitudinal edge of the first and second coil element 108, 110, respectively, are covered. In addition, or as an alternative, the guiding arrangement 114 may comprise a first mid-portion element 120 placed fully inside the opening 112 at the upper end, and/or a second mid-portion element 122 placed fully inside the opening 112 at the lower end.

The heating arrangement 100 may comprise a web guide 124 arranged to interact with a mid-section 128 of the web 104. The mid-section of the web 104 is placed transversally with respect to a longitudinal edge section 126 of the web 104 in view of a feeding direction FD of the web. As illustrated, the longitudinal edge section 126 is arranged to be placed in the opening 112 such that this is heated and that in a subsequent step, the strip can be applied.

The web guide may be placed at a distance D-WG from the guiding arrangement 114. By having the web guide 124, it is made possible to guide the web also outside the longitudinal edge section 126.

As illustrated, the first and second edge element 116, 118 may be placed from an edge distance D-E from each other. The first and second mid-portion element 120, 122 may be placed at a mid-section distance D-M from each other. The edge distance D-E as well as the mid-section distance D-M may both be in the range 0.6 and 2.4 mm. Further, a ratio between a thickness of the web 104 and the edge distance D-E and/or the mid-portion distance D-M may be between 0.1 and 0.3.

The first edge element 116 and the first mid-portion element 120 may be placed at a first distance D-1 from each other. In a similar manner, the second edge element 118 and the second mid-portion element 122 may be placed at a second distance D-2 from each other. As illustrated, the first and second distance D-1, D-2 may be the same, but it is also possible to have these distances different. This latter alternative may for instance be relevant to use in case the web 104 is fed closer to the first or second coil element 108, 110, i.e. offset a center of the opening 112.

The web 104 may be a laminate comprising a number of layers. As illustrated, the laminate may at least comprise an outer protective layer 130, e.g. a polymer-based layer, a carton layer 132, or other cellulose-based layer, an Aluminum foil 134, and an inner protective layer 136.

As illustrated in fig. 1A, by having the first edge element 116 and the first mid-portion element 120 spaced apart transversally, a first void space 138 is formed between the first coil element 108 and the web 104. In a similar manner, by having the second edge element 118 and the second mid-portion element 122 spaced apart transversally, a second void space 140 is formed between the second coil element 110 and the web 104. The first and/or second void space 138, 140 may provide for that the web 104 may be heated in a section coinciding with the first and/or second void space 138, 140 without any interference from the guiding arrangement 114. Even though illustrated that the first and second void space 138, 140 are arranged to coincide seen from the transversal direction TD, that is, overlapping, other options are to have these arranged to be partly overlapping or non-overlapping.

Fig. 1B generally illustrates by way of example the heating arrangement 100 seen from above, or if the web 104 is arranged to be fed vertically from a side view. As illustrated, a feeding direction FD may coincide with a longitudinal direction LD of the web 104. The transversal direction TD may be perpendicular to the longitudinal direction LD, and also the feeding direction FD.

The electric inductor 106 may be arranged to intermittently induce eddy currents in the web 104. The eddy currents may be a continuous pulse, i.e. always activated, it can also be pulsed at a period of 150 ms or less.

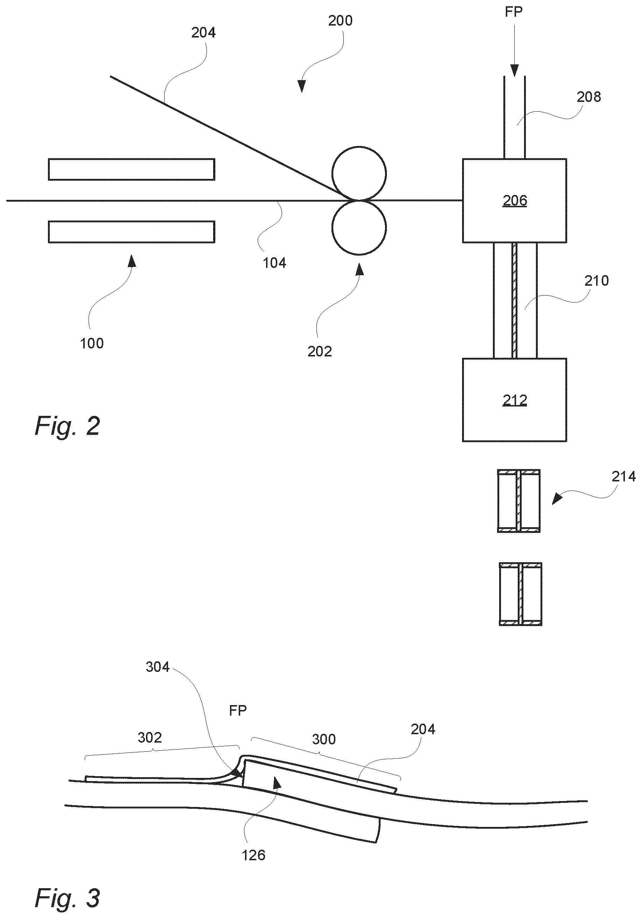

Fig. 2 generally illustrates a packaging apparatus 200 comprising the heating arrangement 100 by way of example. As illustrated, the web 104 of packaging material may be fed through the heating arrangement 100, illustrated in fig. 1A and 1B. In a pressure roller system 202, comprising a pair of rollers, a strip 204 of protective material may be applied onto the web 104, more particularly a first longitudinal section of the web 104, which may correspond to the longitudinal edge section 126 that has been heated by the heating arrangement 100, such that a first part of the strip is attached and a second part of the strip is placed outside the web 104. After having the strip 204 attached to the web 104, more particularly the first part of the strip attached, the web can be fed into a longitudinal sealing station 206 in which the web 104 is formed into a tube 210. In the longitudinal sealing station 206, the strip 204 is also attached to the inside of the tube 210. More particularly, the second part of the strip is attached to the inside of the tube such that an edge of the web is covered and thereby protected from the food product to be held inside the package formed from the web. As illustrated, food product FP can be fed into the tube 210 from above via a product pipe 208.

Downstream the longitudinal sealing station 206, the tube 210 is fed into a transversal sealing station 212. In this station, the tube 210 is formed into packages 214. In the transversal sealing station, transversal sealings are made such that top fins and bottom fins of the packages are formed. To separate the packages, after the transversal sealings are made, these are cut such that the tube is formed into separate packages. Put differently, the transversal sealing is cut in two such that this is transformed into a bottom fin and a top fin.

Fig. 3 illustrates a cross-sectional view of the longitudinal sealing of one of the packages 214, or the tube 210. As illustrated, the strip 204 of protective material, e.g. a polymer-based foil, may be attached to the first longitudinal section 300 and a second longitudinal section 302 of the web, wherein the first longitudinal section 300 may be part of an innermost end section of the web 104 and the second longitudinal section 302 may be part of an outermost end section of the web 104. Before the web 104 is formed into the tube 210, the strip may be attached to the first longitudinal section 300. In the longitudinal sealing station 210, the strip may be attached to the second longitudinal section 302. By having the strip 204, an edge 304 of the web, facing an inside of the tube 210, thereby also the food product FP, is protected such that mid-layers of the packaging material not made to withstand direct contact with the food product FP can be used. For instance, by having the strip, carton-based mid-layers can be used in the packaging material.

By using the heating arrangement 100 illustrated in fig. 1A and 1B, the adherence between the strip and the first longitudinal section 300 of the web can be improved. As an effect, it is made possible to shield the edge 304 in an improved manner. Being able to adequately protect the edge 304 of the web 104 provides for that the package does not deteriorate over time due to that the mid-layers of the web 104 is exposed to the food product FP. Since the strip 204 is applied to the inside of the package, an insufficient application of the strip 204 may be hard to detect, which provides for that this insufficiency may be hard to detect.

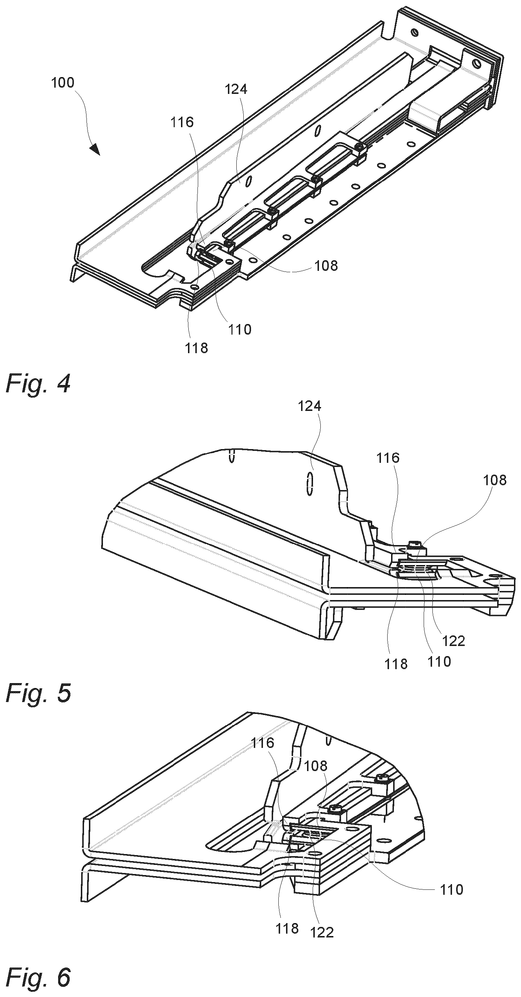

A more detailed example of the heating arrangement 100 is illustrated in fig. 4 to 9. Fig. 4 illustrates a perspective view of the heating arrangement 100 in which the first and second coil element 108, 110 and the first and second edge element 116, 118 are provided. The web guide 124 is provided next to the first and second edge element 116, 118.

Fig. 5 illustrates a perspective view of a front section of the heating arrangement 100 in further detail. As illustrated, in the opening 112 formed between the first and second coil element 108, 110, the second mid-portion element 122 can be provided. The second mid-portion element 122 is arranged to abut the second coil element 110 in line with the general example illustrated in fig. 1.

Fig. 6 illustrates another perspective view of the front section of the heating arrangement 100. As illustrated, the first and second coil element 108, 110 may be arranged such that the second mid-portion element 122 can be placed in the opening provided between the two coil elements. In addition, the first and second edge elements 116, 118 may form part of the heating arrangement to provide for that the web 104 is prevented from being in direct contact with the first and second coil elements 108, 110 such that the web is hindered from being adequately heated, and in turn that the strip cannot adhere sufficiently.

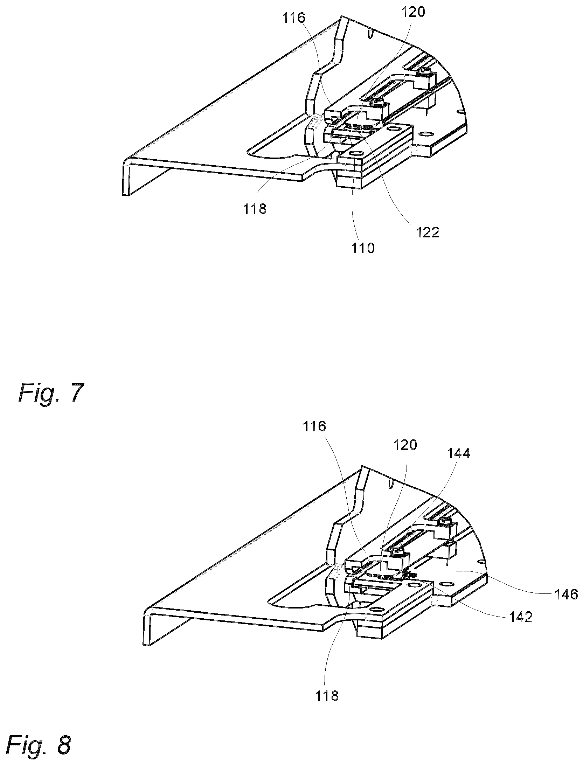

Fig. 7 illustrate yet another perspective view of the front section of the heating arrangement 100. In this specific illustration, the first coil element 108 has been removed for illustrative purposes. As illustrated, below the first coil element 108, the first mid-portion element 120 can be provided. With the first coil element 108 in place, the first mid-portion element 120 is arranged to abut the first coil element 108. The first edge element 116 is also arranged to abut the first coil element 108. In a similar manner, the second mid-portion element 122 and the second edge element 118 are arranged to abut the second coil element 110.

Fig. 8 illustrates yet another perspective view of the front section of the heating arrangement 100. In this figure, two screws and a plate arranged to keep the first and second coil element 108, 110 in position and also at a distance from each other are removed for illustrative purposes. As illustrated, a distance member 142 may be arranged between the first and second mid-portion element 120, 122, and one or more mounting screws 144 be used for fixating the second edge element 118, the second mid-portion element 122, the distance member 142, the first mid-portion element 120 and the first edge element 116 to a frame 146 of the heating arrangement 100. As illustrated, the distance member 142 may be arranged such that this is prevented from rotating around a rotational axis of the screw.

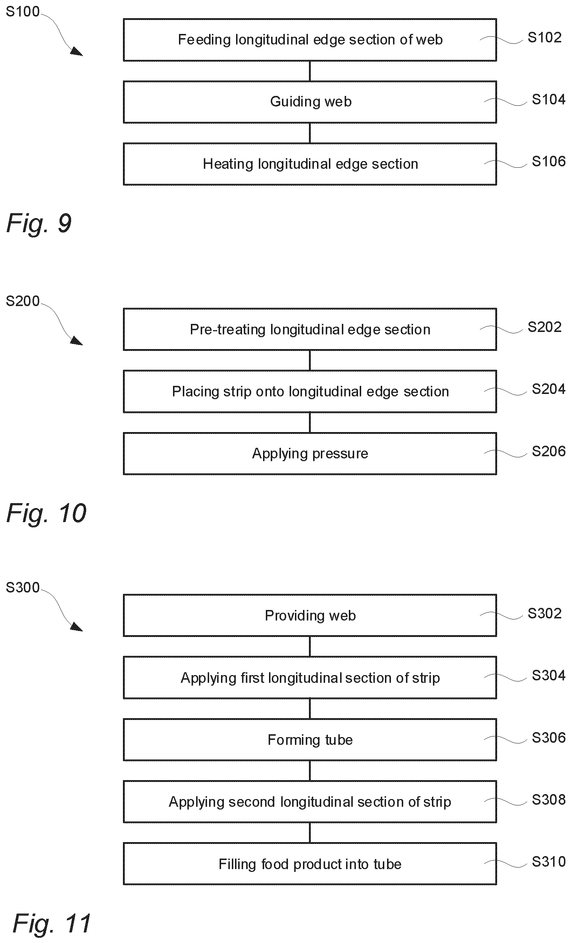

Fig. 9 is a flowchart illustrating a method for method S100 for pre-treating the longitudinal edge section 126 of the web 104 of packaging material before applying the strip 204 of protective material onto the longitudinal edge section 126. The method may comprise feeding S102 the longitudinal edge section 126 of the web 104 through the opening 112 in the heating arrangement 100 comprising the electric inductor 106 in turn comprising the first and the second coil element 108, 110. The opening 112 may be formed between the first and second coil element 108, 110. The method may further comprise guiding S104 the web 104 of packaging material using the guiding arrangement 114 provided in the opening 112, and heating S106 the longitudinal edge section 126 by inducing eddy currents in the packaging material using the electric inductor 106.

Fig. 10 is a flowchart illustrating a method S200 for applying the strip 204 of protective material onto the longitudinal edge section 126 of the web 104 of packaging material. The method may comprise pre-treating S202 the longitudinal edge section 126 according to the method S100 described above and illustrated in fig. 9, placing S204 the strip 204 of protective material onto the longitudinal edge section 126 of the web 104, and applying S206 pressure such that the strip 202 adheres to the longitudinal edge section 126.

Fig. 11 is a flowchart illustrating a method S300 for producing the packages 214 from the web 104 of packaging material. The method may comprise providing S302 the web 104 of packaging material, applying S304 the first longitudinal section 300 of the strip 204 of protective material onto the longitudinal edge section 126 of the web 104 according to the method S200 illustrated in fig. 10, forming S306 the tube 210 from the web 104 of packaging material, and applying S308 the second longitudinal section 302 of the strip 204 of protective material onto the inside of the tube 210 such that the edge 304 of the web 104 is shielded from the inside of the tube 210, and filling S310 the food product FP into the tube 210 from above, wherein the strip 204 is preventing the food product FP from being in direct contact with the edge 304.

From the description above follows that, although various embodiments of the invention have been described and shown, the invention is not restricted thereto, but may also be embodied in other ways within the scope of the subject-matter defined in the following claims.

## Claims

1. A heating arrangement (100) for a longitudinal edge section (126) of a web (104) of packaging material, said heating arrangement (100) comprising
an electric inductor (106) comprising a first and a second coil element (108, 110), wherein an opening (112), configured to allow the longitudinal edge section (126) of the web (104) to pass, is formed between the first and second coil element (108, 110), and
a guiding arrangement (114) arranged in the opening (112) between the first and second coil element (108, 110) such that the web (104) is prevented from being in direct contact with the first and/or second coil element (108, 110).

2. The heating arrangement (100) according to claim 1, wherein the guiding arrangement (114) comprises a first and a second edge element (116, 118) covering a longitudinal edge of the first and second coil element (108, 110), respectively.

3. The heating arrangement (100) according to claim 2, wherein the guiding arrangement (114) comprises a first and/or a second mid-portion element (120, 122) abutting a mid-section of the first and second coil element (108, 110), respectively.

4. The heating arrangement (100) according to claim 3, wherein an edge distance (D-E) between the first and second edge element (116, 118) and/or an mid-section distance (D-M) between the first and second mid-portion element (120, 122) are between 0.6 and 2.4 mm.

5. The heating arrangement (100) according to claim 4, wherein a ratio between a thickness of the web (104) and the edge distance (D-E) and/or the mid-portion distance (D-M) is between 0.1 and 0.3.

6. The heating arrangement (100) according to any one of the claims 3 to 5, wherein a first distance (D-1) is provided between the first edge element (116) and the first mid-portion element (120), and a second distance (D-2) is provided between the second edge element (118) and the second mid-portion element (122), such that, during operation, a first void space (138) is formed between the first coil element (108) and the web (104) and a second void space (140) is formed between the second coil element (110) and the web (104).

7. The heating arrangement (100) according to any one of the preceding claims, wherein the electric inductor (106) is arranged to intermittently induce eddy currents in the web (104).

8. The heating arrangement (100) according to claim 7, wherein the eddy currents are pulsed at a period of 150 ms or less.

9. The heating arrangement (100) according to any one of the preceding claims, further comprising a web guide (124) arranged to interact with a mid-section (128) of the web (104), wherein the mid-section of the web (104) is placed transversally with respect to the longitudinal edge section (126) of the web (104) in view of a feeding direction (FD) of the web, wherein the web guide (124) is placed at a distance (D-WG) from the guiding arrangement (114).

10. The heating arrangement (100) according to any one of the claims 3 to 9, wherein the guiding arrangement (114) comprises a distance member (142) arranged between the first and second mid-portion element (120, 122), and one or more mounting screws (144) arranged to fixate the second edge element (118), the second mid-portion element (122), the distance member (142), the first mid-portion element (120) and the first edge element (116) to a frame (146) of the heating arrangement (100).

11. A method (S100) for pre-treating a longitudinal edge section (126) of a web (104) of packaging material before applying a strip (204) of protective material onto the longitudinal edge section (126), said method comprising
feeding (S102) the longitudinal edge section (126) of the web (104) through an opening (112) in a heating arrangement (100) comprising an electric inductor (106) in turn comprising a first and a second coil element (108, 110), wherein the opening (112) is formed between the first and second coil element (108, 110),
guiding (S104) the web (104) of packaging material using a guiding arrangement (114) provided in the opening (112), and
heating (S106) the longitudinal edge section (126) by inducing eddy currents in the packaging material using the electric inductor (106).

12. A method (S200) for applying a strip (204) of protective material onto a longitudinal edge section (126) of a web (104) of packaging material, said method comprising
pre-treating (S202) the longitudinal edge section (126) according to claim 11,
placing (S204) the strip (204) of protective material onto the longitudinal edge section (126) of the web (104), and
applying (S206) pressure such that the strip (202) adheres to the longitudinal edge section (126).

13. A method (S300) for producing packages (214) from a web (104) of packaging material, said method comprising
providing (S302) the web (104) of packaging material,
applying (S304) a first longitudinal section (300) of a strip (204) of protective material onto a longitudinal edge section (126) of the web (104) according to claim 12,
forming (S306) a tube (210) from the web (104) of packaging material, and
applying (S308) a second longitudinal section (302) of the strip (204) of protective material onto an inside of the tube (210) such that an edge (304) of the web (104) is shielded from the inside of the tube (210), and
filling (S310) food product (FP) into the tube (210) from above, wherein the strip (204) is preventing the food product (FP) from being in direct contact with the edge (304).

14. A packaging apparatus (200) comprising a heating arrangement (100) according to any one of the claims 1 to 10.

15. A kit of parts for upgrading an existing heating arrangement for heating a longitudinal edge section (126) of a web (104) of packaging material into a heating arrangement (100) according to any one of the claims 1 to 10, said existing heating arrangement comprising an electric inductor (106) comprising a first and a second coil element (108, 110), wherein an opening (112), configured to allow a longitudinal edge section (126) of a web (104) of packaging material to pass, is formed between the first and second coil element (108, 110), said kit of parts comprising
a guiding arrangement (114) arranged to be placed in the opening (112) between the first and second coil element (108, 110) such that the web (104) is prevented from being in direct contact with the first and/or second coil element (108, 110),
wherein the guiding arrangement (114) is configured to be assembled to the existing heating arrangement such that the existing heating arrangement is upgraded into the heating arrangement (100) according to any one of the claims 1 to 10.
